# EUROPÄISCHE PATENTSCHRIFT

(11) **EP 3 935 949 B1**
(45) Veröffentlichungstag und Bekanntmachung des Hinweises auf die Patenterteilung: **08.10.2025**
(21) Anmeldenummer: 20184464.4
(22) Anmeldetag: 07.07.2020
(51) Int. Cl.: A21B 3/16, A21B 3/00, A21B 5/02, F24C 14/00, A21B 3/02

(54) **VORRICHTUNG ZUR WARTUNG VON KOMPONENTEN EINER BACKVORRICHTUNG UND BACKVORRICHTUNG**
COMPONENTS MAINTENANCE DEVICE FOR A BAKING DEVICE AND BAKING DEVICE
DISPOSITIF DE MAINTENANCE DES COMPOSANTS D'UN DISPOSITIF DE CUISSON ET DISPOSITIF DE CUISSON

(43) Veröffentlichungstag der Anmeldung: 12.01.2022
(73) Patentinhaber: Bühler Food Equipment GmbH, 2100 Leobendorf (AT)
(72) Erfinder: Bibaric, Markus, 3400 Kierling (AT)
(74) Vertreter: Puchberger & Partner Patentanwälte

(56) Entgegenhaltungen:
- AT-U1- 16 215
- DE-A1- 102011 017 022
- DE-U1- 8 306 381

## Beschreibung

Die Erfindung betrifft eine Vorrichtung gemäß den Merkmalen des unabhängigen Patentanspruchs.

Gattungsgemäße Backvorrichtungen zur industriellen Herstellung von Waffelformkörpern sind in unterschiedlichen Ausführungsformen bekannt. Herkömmliche Backvorrichtungen weisen ein Gehäuse, insbesondere ein wärmegedämmtes Gehäuse, mit einem beheizten Innenraum auf. In diesem Innenraum werden mehrere Backformen entlang eines Endlosförderers nacheinander durch unterschiedliche Bereiche befördert. Meist sind die Backformen als Backzangen ausgebildet. Diese werden nacheinander: durch einen Auftragsbereich mit einer Teigauftragsvorrichtung zum Auftragen einer Backmasse auf die geöffneten Backformen, durch einen Schließbereich zum Schließen der Backformen, durch einen beheizten Backraum zum Backen der in die Backformen eingebrachten Backmasse, durch einen Öffenbereich zum Öffnen der Backformen und durch einen Entnahmebereich mit einer Entnahmevorrichtung zur Entnahme der aus der Backmasse gebackenen Formkörper befördert. Anschließend beginnt der Prozess non vorne.

Hierbei gibt es gemäß Stand der Technik zwei Bauformen. Gemäß einer ersten Bauform ist das Gehäuse durch eine sogenannte Vorkopfwand in einen Vorkopf und in einen Backraum getrennt. Im Backraum sind Heizvorrichtungen vorgesehen, die die Temperatur im Innenraum zum Backen der Waffelformkörper auf über 150°C, insbesondere auf über 180°C bringen. Im Vorkopf sind Komponenten wie die Teigauftragsvorrichtung und die Entnahmevorrichtung vorgesehen. In diesem Bereich herrscht eine niedrigere Temperatur von über 60°C und meist unter 100°C.

Gemäß einer zweiten Bauform ist keine Vorkopfwand vorgesehen, womit auch die Komponenten Auftragsvorrichtung und Entnahmevorrichtung in einem Bereich angeordnet sind, in dem eine Temperatur von über 150°C, bevorzugt von über 180°C herrscht.

Aufbauend auf dem Stand der Technik gibt es eine Nachfrage nach gattungsgemäßen Backvorrichtungen, deren Effizienz verbessert ist. Hierbei spielen Faktoren wie Energieverbrauch, Produktdurchsatz, Wartungsintervalle, Reinigungsmöglichkeit und Bediensicherheit eine große Rolle.

Aufgabe der Erfindung ist es nun, eine gattungsgemäße Backvorrichtung zu schaffen, die eine verbesserte Effizienz aufweist.

Die erfindungsgemäße Aufgabe wird insbesondere durch die Merkmale der unabhängigen Patentansprüche gelöst.

In der Praxis hat sich herausgestellt, dass unvorhergesehene Ereignisse, die eine Wartung der Backvorrichtung notwendig machen, die Effizienz der Backvorrichtung stark herabsetzen. Beispielsweise kommt es vor, dass fertig gebackene Waffelformkörper durch die Entnahmevorrichtung nicht vollständig oder gar nicht aus der Backform entfernt werden. Ein dadurch bewirkter Waffelblattstau muss dadurch behoben werden, dass eine Bedienperson eine Gehäusetüre öffnet, um manuell den Stau zu beheben. Dabei geht einerseits eine erhebliche Wärmemenge verloren, wodurch die Energieeffizienz herabgesetzt wird. Zudem muss der Produktionsprozess gegebenenfalls angehalten werden, wodurch die Produktionseffizienz herabgesetzt wird. Allem voran bedeutet das Hantieren an heißen, bewegten Maschinenkomponenten aber ein erhebliches Sicherheitsrisiko für die Bedienperson.

Im Stand der Technik sind Vorrichtungen bekannt, die die Einbringung einer Sprühlanze zum Zweck der Wartung bzw. Reinigung in den Innenraum einer Backvorrichtung ermöglichen. So beschreibt beispielsweise die AT16 215 U1 eine Reinigungsvorrichtung, die durch eine Öffnung in das Innere der Backvorrichtung eingebracht werden kann. Ferner beschreibt die DE 10 2011 017022 A1 eine Vorrichtung, bei der die Sprühlanze einer Sprüheinrichtung durch eine Durchführungsstruktur in der Tür der Vorrichtung geführt werden kann.

Durch die erfindungsgemäße Vorrichtung soll nun eine effizientere und sichere Wartung und insbesondere eine Reinigung im laufenden Betrieb der Backvorrichtung ermöglicht werden.

Die Erfindung betrifft eine Vorrichtung zur Wartung und insbesondere zur Reinigung von, in einem beheizten Innenraum eines Gehäuses einer Backvorrichtung angeordneten, Komponenten, umfassend:
- ein Gehäuseteil zur Bildung eines Teils des Gehäuses der Backvorrichtung oder zur Verbindung mit dem Gehäuse der Backvorrichtung,
- eine Sprühlanze mit einer Ausgabeöffnung zur Ausgabe eines Sprühmediums, insbesondere zur Ausgabe von Druckluft,
- eine Verbindungsvorrichtung zur beweglichen, bevorzugt dichtenden, Halterung der Sprühlanze in oder an dem Gehäuseteil,
- gegebenenfalls ein Bedienelement zur händischen Bewegung und zur Wahl der Lage der Sprühlanze gegenüber dem Gehäuseteil.

Als Wartung werden Handlungen bezeichnet, die einen störungsfreien Produktionsbetrieb erhalten sollen, insbesondere Handlungen wie das Entfernen von Teigresten auf Backzangen, das Entfernen von ungewollt an Backformen anhaftenden Waffelblättern, die Reinigung von Backformen etc.

Als Bedienelement kann jedes Element der Sprühlanze verstanden werden, das eine Bedienung der Sprühlanze, insbesondere eine Bewegung, ermöglicht. Ein Bedienelement kann beispielsweise ein Griff oder ein anderer Abschnitt der Sprühlanze zur Bedienung der Vorrichtung sein.

Als dichtend wird eine Verbindung bezeichnet, den Austritt von heißem Gas aus dem Innenraum der Backvorrichtung in ausreichendem Maße verhindert. Insbesondere soll eine sichere Bedienung durch die Bedienperson ermöglicht werden. Zudem soll ein Wärmeverlust minimiert werden.

Gegebenenfalls ist vorgesehen, dass die Ausgabeöffnung auf einer Seite des Gehäuseteils angeordnet ist und das Bedienelement auf der anderen Seite des Gehäuseteils.

Gegebenenfalls ist vorgesehen, dass die Sprühlanze ein zumindest abschnittsweise starr ausgebildetes Rohr umfasst, das dichtend durch die Verbindungsvorrichtung hindurchgeführt ist, und dass die Ausgabeöffnung und das Bedienelement an dem Rohr vorgesehen sind.

Erfindungsgemäß ist vorgesehen, dass die Verbindungsvorrichtung ein Schwenklager zur Ermöglichung einer Verschwenkbarkeit der Sprühlanze gegenüber dem Gehäuseteil umfasst.

Erfindungsgemäß ist vorgesehen, dass das Schwenklager als Kugelkopflager ausgebildet ist und einen, insbesondere dichtend, in einer Kugelkopfausnehmung gelagerten Kugelkopf umfasst.

Gegebenenfalls ist vorgesehen, dass die Verbindungsvorrichtung ein Linearlager zur Längsführung, insbesondere zur Ermöglichung eines linearen Freiheitsgrades, der Sprühlanze gegenüber dem Gehäuseteil umfasst.

Gegebenenfalls ist vorgesehen, dass das Linearlager in dem Kugelkopf vorgesehen ist.

Gegebenenfalls ist vorgesehen, dass mindestens eine Lagerfläche des Kugelkopfs, insbesondere die Lagerfläche des Kugelkopflagers zur Lagerung des Kugelkopfes in der Kugelkopfausnehmung und/oder die Lagerfläche des Linearlagers zur Lagerung der Sprühlanze, aus Polytetrafluorethylen (PTFE)gebildet sind.

Gegebenenfalls ist vorgesehen, dass die Lagerfläche der Kugelkopfausnehmung aus rostfreiem Edelstahl gebildet ist.

Gegebenenfalls ist vorgesehen, dass die in dem Linearlager geführte Lagerfläche der Sprühlanze aus rostfreiem Edelstahl gebildet ist.

Gegebenenfalls ist vorgesehen, dass die Verbindungsvorrichtung eine den Bewegungsraum der Sprühlanze einschränkende Kulisse oder Schablone oder einen Anschlag aufweist.

Gegebenenfalls ist vorgesehen, dass jener Endabschnitt der Sprühlanze, der im Bereich der Ausgabeöffnung angeordnet ist, nachgiebig und insbesondere aus einem flexiblen, temperaturbeständigen Schlauchstück ausgebildet ist.

Gegebenenfalls ist im Endabschnitt eine Ausgabedüse vorgesehen.

Bevorzugt betrifft die Erfindung eine Backvorrichtung, an der eine erfindungsgemäße Vorrichtung zur Wartung von Komponenten vorgesehen ist.

Bevorzugt betrifft die Erfindung eine Backvorrichtung zum Herstellen gebackener, bevorzugt essbarer, Waffelformkörper, mit einem wärmedämmten Gehäuse und einem beheizten Innenraum, in dem mehrere Backformen entlang eines Endlosförderers angeordnet sind und jeweils nacheinander:
- einen Auftragsbereich mit einer Teigauftragsvorrichtung zum Einbringen einer Backmasse in die geöffneten Backformen,
- einen Schließbereich zum Schließen der Backformen,
- einen beheizten Backraum zum Backen der in die Backformen eingebrachten Backmasse,
- einen Öffenbereich zum Öffnen der Backformen,
- einen Entnahmebereich mit einer Entnahmevorrichtung zur Entnahme der aus der Backmasse gebackenen formstabilen Waffelformkörper aus den geöffneten Backformen,
- und dann wieder den Auftragsbereich, durchlaufen.

Gegebenenfalls ist vorgesehen, dass der durch die Verbindungsvorrichtung definierte Bewegungsraum der Sprühlanze den Bereich nach dem Entnahmebereich und vor dem Auftragsbereich umfasst, sodass die Sprühlanze zumindest auf jene Komponenten, insbesondere auf Backformen, der Backvorrichtung gerichtet werden kann, die sich nach dem Entnahmebereich und vor dem Auftragsbereich befinden.

Gegebenenfalls ist vorgesehen, dass das Gehäuseteil der Vorrichtung einen Teil des Gehäuses bildet, und/oder dass das Gehäuseteil der Vorrichtung einen Teil einer Gehäusetür bildet, oder dass das Gehäuseteil der Vorrichtung eine Gehäusetür des Gehäuses ist.

Gegebenenfalls ist vorgesehen, dass im Bereich des Gehäuseteils ein Sichtfenster vorgesehen ist, wobei das Sichtfenster insbesondere als Isolierglasanordnung ausgebildet ist.

Gegebenenfalls ist vorgesehen, dass die Sprühlanze eine handbetätigte Sprühlanze ist, die beweglich aber dichtend gegenüber dem Gehäuseteil angeordnet ist, sodass eine Bedienperson von außen Wartungsarbeiten im Innenraum der Backvorrichtung vornehmen kann - und dies bei geschlossenem Gehäuse. Hierzu ist die Sprühlanze über eine spezielle Verbindungsvorrichtung mit dem Gehäuse der Backvorrichtung gekoppelt. Die Verbindungsvorrichtung lässt einerseits eine Bewegung der Sprühlanze entlang mehrerer unterschiedlicher Freiheitsgrade zu. Zudem ist die Verbindungsvorrichtung bevorzugt dichtend ausgebildet, sodass ein ungewollter Austritt von heißem Gas des Innenraums der Backvorrichtung weitestgehend verhindert wird.

Gegebenenfalls kann vorgegeben sein, dass die Sprühlanze über die Verbindungsvorrichtung derart an dem Gehäuse der Backvorrichtung gehalten oder gelagert ist, dass die Sprühlanze händisch entfernt und insbesondere aus der Verbindungsvorrichtung herausgezogen werden kann. Zur Durchführung von Wartungsarbeiten kann die Sprühlanze gemäß dieser Ausführungsform wieder durch die Verbindungsvorrichtung eingeführt werden.

Es kann vorteilhaft sein, wenn die Sprühlanze ein starr ausgebildetes Rohr umfasst. An jenem Endabschnitt der Sprühlanze, an dem auch die Ausgabeöffnung vorgesehen ist, kann das Rohr zumindest abschnittsweise flexibel ausgebildet sein. Beispielsweise kann in diesem Bereich ein flexibles, temperaturbeständiges Schlauchstück vorgesehen sein. Dadurch kann verhindert werden, dass Teile der Backvorrichtung beschädigt werden, wenn die Sprühlanze mit diesen in Kontakt kommt. Die Vermeidung einer Kollision der Sprühlanze mit Komponenten der Backvorrichtung kann auch dadurch erfolgen, dass der Bewegungsraum der Sprühlanze durch eine Kulisse oder eine Schablone eingeschränkt wird.

Die Sprühlanze ist in allen Ausführungsformen bevorzugt als Druckluftlanze zur Einbringung von Druckluft ausgebildet. Über das Bedienelement kann die Druckluftzufuhr gesteuert, insbesondere freigegeben und gestoppt werden, um beispielsweise Verschmutzungen durch gezieltes Abblasen zu entfernen. In allen Ausführungsformen ist die Sprühlanze bevorzugt mit einer Sprühmediumsquelle wie beispielsweise mit einem Kompressor und/oder einem Drucklufttank verbunden. Die Verbindung geschieht beispielsweise über eine flexible Schlauchleitung.

Um die Wartungsarbeiten zu vereinfachen, weist das Gehäuse im Bereich der Vorrichtung bevorzugt ein Sichtfenster auf. Dadurch kann die Bedienperson bei der Wartung die Bewegungen der Sprühlanze und die Position und Ausrichtung der Ausgabeöffnung beobachten.

Gegebenenfalls ist das Gehäuse der Backvorrichtung geschlossen ausgebildet und weist lediglich Öffnungen zur gezielten Zuführung von Medien wie beispielsweise zur Zuführung von Verbrennungsluft, zur Zuführung von Konvektionsluft, zur Zuführung des Brennstoffs für die Beheizung oder auch zur Einführung der Sprühlanze auf.

Gemäß einer möglichen Ausführungsform ist vorgesehen, dass die Vorrichtung ein Nachrüstsatz für bestehende Backvorrichtungen ist. Beispielsweise kann das Gehäuseteil als Gehäusetüre ausgebildet sein, die eine Gehäusetüre einer bestehenden Backvorrichtung ersetzt.

Das Schwenklager zur Ermöglichung einer Verschwenkbarkeit der Sprühlanze ist als Kugelkopflager ausgebildet. Dieses Kugelkopflager ermöglicht eine Verschwenkung der Sprühlanze entlang mehrerer Schwenkfreiheitsgrade. Damit kann die Sprühlanze und insbesondere deren Ausgabeöffnung beliebig entlang einer zweidimensionalen, insbesondere gekrümmten, Fläche bewegt werden. Zusätzlich ist bevorzugt auch noch ein weiterer Freiheitsgrad zur Bewegung der Sprühlanze vorgesehen, sodass eine räumliche Bewegung der Sprühlanze und der Ausgabeöffnung ermöglicht wird. Durch diesen weiteren Freiheitsgrad kann beispielsweise die Einstecktiefe der Sprühlanze verändert und gewählt werden.

Das Kugelkopflager umfasst eine Kugelkopfausnehmung, in der ein Kugelkopf gelagert ist. Bevorzugt ist die Kugelkopfausnehmung derart ausgebildet, dass der Kugelkopf dichtend aber drehbar gelagert ist. Insbesondere kann die Kugelkopfausnehmung Komponenten umfassen, die eine Einstellung des Spiels der Lagerung des Kugelkopfs in der Kugelkopfausnehmung ermöglichen.

Der Kugelkopf weist bevorzugt an seinen Lagerflächen eine Oberfläche aus Teflon, also Polytetrafluorethylen bzw. PTFE auf. Diese Lagerflächen aus PTFE ermöglichen eine vorteilhafte Reibpaarung. Die Oberfläche bzw. die Lagerfläche der Kugelkopfausnehmung kann insbesondere aus Edelstahl gebildet sein. Der in der Verbindungsvorrichtung gelagerte Abschnitt der Sprühlanze kann ebenfalls aus Edelstahl ausgebildet sein. Die Reibpaarung Edelstahl - Teflon weist vorteilhafte Eigenschaften auf. Zudem ist PTFE ausreichend temperaturbeständig. Gegebenenfalls ist vorgesehen, dass der Kugelkopf aus Teflon, also aus Polytetrafluorethylen bzw. PTFE gebildet ist. Es handelt sich beispielsweise um eine massive Kugel aus PTFE. Diese kann mit einer Bohrung versehen sein, wobei diese Bohrung das Linearlager bilden kann.

In allen Ausführungsformen ist bevorzugt vorgesehen, dass jene Komponenten der Vorrichtung, die mit dem Innenraum in Kontakt stehen, eine ausreichende Temperaturbeständigkeit aufweisen. Die betrifft beispielsweise Teile der Sprühlanze und Teile der Verbindungsvorrichtung wie insbesondere den Kugelkopf. Zudem ist es vorteilhaft, wenn alle verwendeten Materialien, insbesondere der rostfreie Edelstahl und PTFE, für einen Einsatz in Maschinen zur industriellen Herstellung von Lebensmitteln zugelassen sind.

Gegebenenfalls ist vorgesehen, dass entlang des Gehäuses der Backvorrichtung mehrere Verbindungsvorrichtungen vorgesehen sind, sodass eine Sprühlanze wahlweise an einer dieser Verbindungsvorrichtungen zum Einsatz gebracht werden kann oder sodass mehrere Sprühlanzen an unterschiedlichen Stellen der Backvorrichtung vorgesehen sind.

In weiterer Folge wird die Erfindung anhand der Figuren weiter beschrieben.
Figur 1 zeigt eine schematische Seitenansicht einer Backvorrichtung, wobei Teile des Gehäuses ausgeblendet sind.
Figur 2 zeigt eine mögliche Ausgestaltung von Komponenten der Vorrichtung von innen.
Figur 3 zeigt dieselbe Ausgestaltung wie Figur 2, jedoch von außen.
Figur 4 zeigt eine Prinzipskizze des Aufbaus einer Vorrichtung.

Wenn nicht anders angegeben, entsprechen die Bezugszeichen folgenden Komponenten: Innenraum 1, Gehäuse 2, Gehäuseteil 3, Sprühlanze 4, Ausgabeöffnung 5, Verbindungsvorrichtung 6, Bedienelement 7, Schwenklager 8, Kugelkopfausnehmung 9, Kugelkopf 10, Linearlager 11, Lagerfläche 12' (des Kugelkopfes), Lagerfläche 12" (der Kugelkopfausnehmung), Lagerfläche 12‴ (der Sprühlanze), Lagerfläche 12ʺʺ (des Linearlagers),Kulisse 13, Endabschnitt 14, Backform 15, Auftragsbereich 16, Schließbereich 17, Backraum 18, Öffenbereich 19, Entnahmebereich 20, Entnahmevorrichtung 21, Gehäusetüre 22 und Sichtfenster 23.

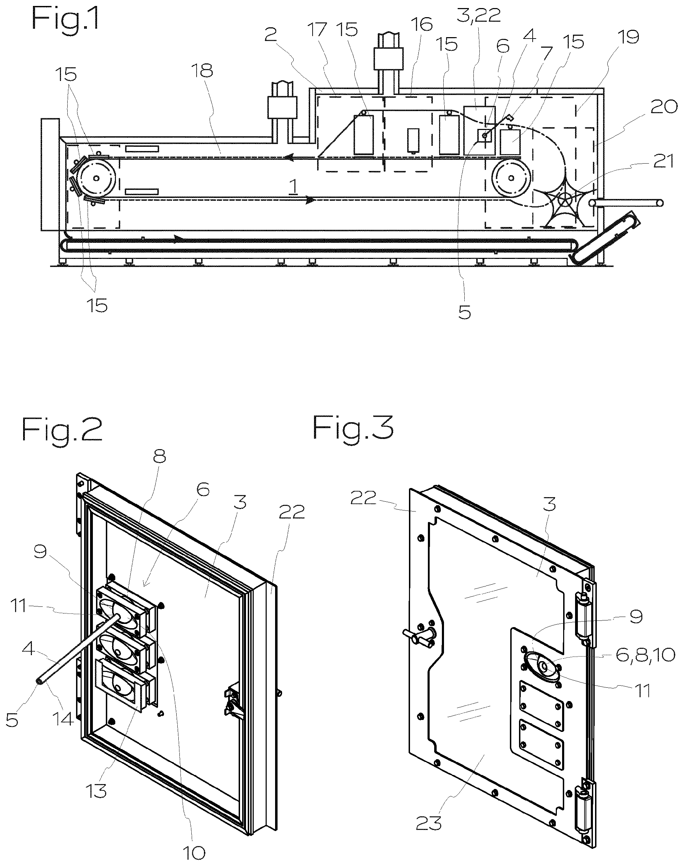

**Figur 1** zeigt eine schematische Seitenansicht einer Backvorrichtung, an der eine Vorrichtung zur Wartung von Komponenten vorgesehen ist. Die Backvorrichtung umfasst ein Gehäuse 2, das einen beheizten Innenraum 1 umgibt bzw. bildet. Die Backvorrichtung ist dazu eingerichtet, Waffelformkörper wie beispielsweise Waffelblätter herzustellen. Hierzu umfasst die Backvorrichtung mehrere entlang eines Endlosförderers aneinandergereihte Backformen 15, die bevorzugt als auf- und zuklappbare Backzangen ausgebildet sind. Zu besseren Übersichtlichkeit sind nicht alle Backformen 15 eingezeichnet. Die Backformen 15 werden entlang eines Endlosförderers durch die Backvorrichtung bzw. durch den Innenraum 1 befördert. Dabei durchlaufen sie einen Öffenbereich 19, in denen sie geöffnet werden.

Anschließend oder gleichzeitig durchlaufen sie einen Entnahmebereich 20 mit einer Entnahmevorrichtung 21 zur Entnahme der in den Backformen 15 gebackenen Waffelformkörper. Die Entnahmevorrichtung 21 kann gemäß Stand der Technik ausgebildet sein und umfasst beispielsweise, wie in der vorliegenden Darstellung, einen Abnahmestern. Die Backformen 15 werden hierzu im Bereich des Umlenkpunktes, also beim Wechsel von der unteren Transportebene auf die obere Transportebene, geöffnet, sodass das Waffelblatt selbsttätig aus der geöffneten Backzange auf einen Abnahmearm des Abnahmesterns fällt. Der Abnahmestern befördert das entnommene Waffelblatt dann auf eine weitere Förderfläche zum Abtransport des Waffelblatts. Gegebenenfalls kann im Entnahmebereich 20, insbesondere als Teil der Entnahmevorrichtung 21, ein Abstreifer vorgesehen sein, der das Waffelblatt von der Backform 15 abstreift. Zusätzlich oder alternativ kann gegebenenfalls eine Druckluftdüse vorgesehen sein, die das Ablösen des Waffelformkörpers von der Backform 15 unterstützt.

Alternativ können jedoch auch andere herkömmliche Abnahmevorrichtungen wie beispielsweise Drehgestelle mit Saugvorrichtungen oder ähnliche Entnahmevorrichtungen 21 vorgesehen sein.

Nach dem Entnahmebereich 20 werden die Backformen 15 weiter zu einem Auftragsbereich 16 befördert, in dem die Backmasse in die Backformen 15 eingebracht wird. Im Auftragsbereich 16 kann gemäß Stand der Technik ein Teigaufgießer vorgesehen sein.

Anschließend werden die Backformen 15 weiter zu einem Schließbereich 17 befördert, in dem die Backformen 15 geschlossen werden. Im Anschluss daran werden die geschlossenen Backformen 15 durch einen beheizten Backraum 18 befördert, in dem die Backmasse in den Backformen 15 zu Waffelformkörpern gebacken werden.

Danach kann der Vorgang von neuem beginnen.

Gegebenenfalls kann zur Abtrennung des Backraums 18 eine sogenannte Vorkopfwand vorgesehen sein, die Öffnungen aufweist, um die Backformen 15 und den Endlosförderer hindurchzuführen.

Erfindungsgemäß umfasst die Backvorrichtung eine Vorrichtung zur Wartung von Komponenten, die im Innenraum 1 des Gehäuses 2 der Backvorrichtung vorgesehen sind, wobei diese Komponenten beispielsweise die Backformen 15 bzw. Backplatten sind. Die Vorrichtung umfasst eine Sprühlanze 4, die an einem Gehäuseteil 3 gelagert ist. Das Gehäuseteil 3 ist in dieser Ausführungsform als Gehäusetüre 22 ausgebildet. Alternativ kann das Gehäuseteil 3 ein beliebiges Teil sein, das das Gehäuse 2 vervollständigt bzw. das eine Anbringung der Sprühlanze am und im Gehäuse 2 ermöglicht.

Die Sprühlanze 4 ist über eine Verbindungsvorrichtung 6 mit dem Gehäuseteil 3 gekoppelt. Die Verbindungsvorrichtung 6 ist in allen Ausführungsformen bevorzugt derart ausgebildet, dass die Sprühlanze 4 gegenüber dem Gehäuseteil 3 und bevorzugt auch gegenüber dem Gehäuse 2 bewegt werden kann. Zusätzlich ist die Verbindungsvorrichtung 6 bevorzugt dichtend ausgebildet, sodass das im Innenraum 1 vorgesehene heiße Gas nicht oder nur in geringem Ausmaß entweichen kann.

Die Bedienung der Sprühlanze 4 ist über ein Bedienelement 7 möglich. Dieses Bedienelement 7 ist außerhalb des Gehäuses 2 angeordnet, um eine sichere händische Bedienung der Vorrichtung von außen zu ermöglichen. Das Bedienelement 7 kann beispielsweise ein herkömmlicher Griff der Sprühlanze 4 sein. Bevorzugt kann das Bedienelement 7 auch eine Einrichtung umfassen, über die die Ausgabe des Sprühmediums durch die Sprühlanze 4 gesteuert werden kann. Das Sprühmedium ist bevorzugt Druckluft, die über die Betätigung eines Schalters von der Bedienperson gezielt ausgegeben werden kann.

Die Sprühlanze 4 erstreckt sich ausgehend von dem Bedienelement 7 durch das Gehäuseteil 3 in den Innenraum 1 des Gehäuses 2.

In bevorzugter Weise wird durch die Verbindungsvorrichtung 6 ein Bewegungsraum definiert, in dem die Sprühlanze 4 bewegt werden kann. Dieser Bewegungsraum der Sprühlanze 4, insbesondere der Bewegungsraum der Ausgabeöffnung 5 der Sprühlanze 4, wird durch die Verbindungsvorrichtung 6 definiert bzw. eingeschränkt.

Bevorzugt ist die Vorrichtung derart an der Backvorrichtung angebracht, dass der Bewegungsraum der Sprühlanze 4 den Raum nach dem Entnahmebereich 20, insbesondere nach der Entnahmevorrichtung 21 und vor dem Auftragsbereich 16 umfasst. Dadurch können jene Rückstände von den Backformen 15 entfernt werden, die in unerwünschter Weise im Entnahmebereich 20 nicht entnommen wurden. Zudem kann sich der Bewegungsraum der Sprühlanze 4 auch in den Auftragsbereich 16 erstrecken, sodass über die Sprühlanze 4 auch der Teigaufgießer bzw. andere Komponenten des Auftragsbereichs 16 gewartet bzw. gereinigt werden können.

**Figur 2** zeigt eine schematische Detailansicht von Komponenten der erfindungsgemäßen Vorrichtung. Das Gehäuseteil 3 ist in dieser Ausführungsform als Gehäusetüre 22 ausgebildet. Diese Gehäusetüre 22 kann ein Teil des Gehäuses 2 einer Backvorrichtung sein. Die dem Betrachter der Figur zugewandte Fläche ist die Innenseite des Gehäuseteils 3, also jene Seite des Gehäuseteils 3, die dem Innenraum 1 der Backvorrichtung zugewandt ist. Die Sprühlanze 4 weist an ihrem inneren Endabschnitt 14 eine Ausgabeöffnung 5 zur Ausgabe des Sprühmediums auf. Zur Koppelung der Sprühlanze 4 mit dem Gehäuseteil 3 ist die Verbindungsvorrichtung 6 vorgesehen. Die Verbindungsvorrichtung 6 umfasst ein Schwenklager 8, das eine Verschwenkung der Sprühlanze 4 gegenüber dem Gehäuseteil 3 ermöglicht. In der vorliegenden, erfindungsgemäßen Ausführungsform ist das Schwenklager 8 als Kugelkopflager ausgebildet und ermöglicht eine Verschwenkung der Sprühlanze 4 entlang unterschiedlicher Schwenkrichtungen.

Das Schwenklager 8 umfasst einen Kugelkopf 10 und eine Kugelkopfausnehmung 9. Der Kugelkopf 10 ist in der Kugelkopfausnehmung 9 drehbar bzw. schwenkbar gelagert. Bevorzugt ist das Spiel der Lagerung des Kugelkopfes 10 in der Kugelkopfausnehmung 9 einstellbar. In der vorliegenden Ausführungsform ist dies über zwei im Wesentlichen parallel zueinander verlaufende Platten ermöglicht, deren Lage zueinander über Stellschrauben eingestellt werden kann.

Der Kugelkopf 10 weist bevorzugt eine Oberfläche aus PTFE auf. Gegebenenfalls kann der gesamte Kugelkopf 10 aus PTFE gebildet sein. Dieses Material weist positive Gleiteigenschaften auf. Insbesondere kann die Kugelkopfausnehmung 9 mit einer Oberfläche aus Edelstahl eine gute Gleitpaarung mit dem Teflonmaterial bilden.

Zur linearen Führung der Sprühlanze 4 ist ein Linearlager 11 vorgesehen. Dieses Linearlager 11 ist in der vorliegenden Ausführungsform als einfache gerade Bohrung oder Öffnung in dem Kugelkopf 10 ausgebildet, wobei durch diese Bohrung oder Öffnung die Sprühlanze 4 linear geführt verlagerbar ist.

Durch die Verbindungsvorrichtung 6 ist der Bewegungsraum der Sprühlanze 4 bestimmt bzw. definiert. Um Kollisionen mit Komponenten der Backvorrichtung zu vermeiden, kann die Verbindungsvorrichtung 6 eine Kulisse 13 bzw. eine Schablone zur Einschränkung des Bewegungsraums bzw. der Bewegbarkeit der Sprühlanze 4 umfassen. In der vorliegenden Ausführungsform sind drei Verbindungsvorrichtungen 6 untereinander angeordnet. Die unterste Verbindungsvorrichtung 6 weist eine Kulisse 13 auf, die in dieser Ausführungsform die Beweglichkeit nach links, nach rechts und nach unten einschränkt. Eine derartige Kulisse 13 kann an jeder der Verbindungsvorrichtungen 6 vorgesehen sein und je nach gewünschter Einschränkung des Bewegungsraums 14 in Form und Größe angepasst werden. Gegebenenfalls kann an dem Gehäuseteil 3 auch nur eine Verbindungsvorrichtung 6 vorgesehen sein, an der eine Kulisse 13 angebracht sein kann.

**Figur 3** zeigt eine Vorrichtung mit denselben Komponenten wie Figur 2, jedoch von der anderen Seite, also von der Außenseite des Gehäuseteils 3 betrachtet. In dieser Ansicht wurde die Sprühlanze 4 entfernt und aus der Verbindungsvorrichtung 6 gezogen. Die verbleibende Öffnung zur Einführung der Sprühlanze 4 kann beispielsweise durch einen Verschluss verschlossen werden, wenn die Sprühlanze 4 nicht in der Verbindungsvorrichtung 6 eingeführt ist. In Fig. 3 umfasst das Gehäuseteil 3 im Bereich der Verbindungsvorrichtung 6, insbesondere neben der Verbindungsvorrichtung 6, ein Sichtfenster 23. Dieses Sichtfenster 23 ermöglicht einen Einblick in den Innenraum 1 des Gehäuses 2 und somit ein Beobachten der bewegbar angeordneten Sprühlanze 4 bzw. deren Ausgabeöffnung 5. Das Sichtfenster kann bevorzugt als Isolierglasanordnung ausgebildet sein, und insbesondere eine temperaturbeständige Mehrfachverglasung umfassen. Die restlichen Komponenten entsprechen den in Figur 2 beschriebenen Komponenten.

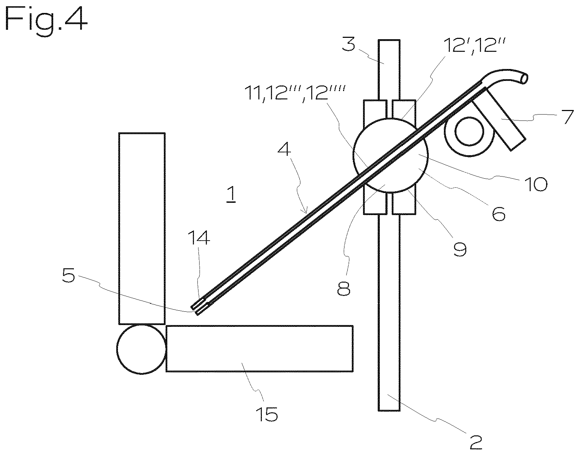

**Figur 4** zeigt eine Prinzipskizze der Funktionsweise der erfindungsgemäßen Vorrichtung. Eine Sprühlanze 4 ist über eine Verbindungsvorrichtung 6 mit einem Gehäuseteil 3 gekoppelt, wobei das Gehäuseteil 3 bevorzugt ein Teil des Gehäuses 2 der Backvorrichtung bildet oder verschließt. Die Sprühlanze 4 weist eine Ausgabeöffnung 5 auf, die zur Ausgabe eines Sprühmediums, insbesondere zur Ausgabe von Druckluft eingerichtet ist. Die Sprühlanze 4 ist über ein Bedienelement 7 von einer Bedienperson bedienbar. Insbesondere ist die Sprühlanze 4 bewegbar aber dichtend mit dem Gehäuseteil 3 verbunden. Dadurch kann eine Bedienperson von außen eine gezielte Ausgabe eines Sprühmediums auf einen wählbaren Bereich im Innenraum 1 des Gehäuses 2 der Backvorrichtung steuern. Die Verbindungsvorrichtung umfasst in der vorliegenden Ausführungsform ein Schwenklager 8. Dieses

Schwenklager 8 ist als Kugelkopflager ausgebildet und umfasst eine Kugelkopfausnehmung 9 sowie einen in der Kugelkopfausnehmung 9 drehbar bzw. schwenkbar gelagerten Kugelkopf 10.

Zusätzlich kann ein Linearlager 11 vorgesehen sein, das eine linear geführte Lagerung und Bewegbarkeit der Sprühlanze 4 gegenüber dem Gehäuseteil 3 ermöglicht.

In der vorliegenden Ausführungsform ist das Linearlager 11 durch eine dem Verlauf der Sprühlanze 4 entsprechende Öffnung oder Bohrung gebildet, die sich durch die Verbindungsvorrichtung 6, insbesondere durch den Kugelkopf 10, erstreckt.

In allen Ausführungsformen kann durch das Linearlager 11 die Einstecktiefe der Sprühlanze 4 in den Innenraum 1 des Gehäuses 2 gewählt werden. In allen Ausführungsformen kann durch das Schwenklager 8 eine Schwenkstellung der Sprühlanze 4 gegenüber dem Gehäuse 2 bzw. dem Gehäuseteil 3 bewirkt werden. Bevorzugt weisen das Schwenklager 8 und/oder das Linearlager 11 jeweils mindestens eine Lagerfläche 12 auf. Insbesondere weist der Kugelkopf 10 eine außenliegende Lagerfläche 12' auf, in der der Kugelkopf 10 an der Kugelkopfausnehmung 9 anliegt. Zudem weist auch das Linearlager 11 eine Lagerfläche 12"" auf.

Mit der Vorrichtung kann ein gezielter Druckluftstrahl auf eine Backform 15 abgegeben werden, um beispielsweise Teigreste zu entfernen. Um das Risiko einer Beschädigung von Komponenten der Backvorrichtung zu verringern, kann die Sprühlanze 4 an jenem Endabschnitt 14, an dem die Ausgabeöffnung 5 vorgesehen ist, einen nachgiebigen, weichen Abschnitt haben. Dieser Endabschnitt 14 kann beispielsweise durch ein temperaturbeständiges, weiches Schlauchstück gebildet werden. Das Schlauchstück kann im Endbereich 14 eine starren Lanze bzw. eines starren Rohrs angebracht sein.

## Patentansprüche

1. Vorrichtung zur Wartung und insbesondere zur Reinigung von, in einem beheizten Innenraum (1) eines Gehäuses (2) einer Backvorrichtung angeordneten, Komponenten, umfassend:
- ein Gehäuseteil (3) zur Bildung eines Teils des Gehäuses (2) der Backvorrichtung oder zur Verbindung mit dem Gehäuse (2) der Backvorrichtung,
- eine Sprühlanze (4) mit einer Ausgabeöffnung (5) zur Ausgabe eines Sprühmediums, insbesondere zur Ausgabe von Druckluft,
- eine Verbindungsvorrichtung (6) zur beweglichen Halterung der Sprühlanze (4) in oder an dem Gehäuseteil (3)
**dadurch gekennzeichnet,**
- **dass** die Verbindungsvorrichtung (6) ein Schwenklager (8) zur Ermöglichung einer Verschwenkbarkeit der Sprühlanze (4) gegenüber dem Gehäuseteil (3) umfasst
- und **dass** das Schwenklager (8) als Kugelkopflager ausgebildet ist und einen, insbesondere dichtend, in einer Kugelkopfausnehmung (9) gelagerten Kugelkopf (10) umfasst.

2. Vorrichtung nach Anspruch 1, **dadurch gekennzeichnet,**
- **dass** ein Bedienelement (7) zur händischen Bewegung und zur Wahl der Lage der Sprühlanze (4) gegenüber dem Gehäuseteil (3) vorgesehen ist,
- und **dass** die Ausgabeöffnung (5) auf einer Seite des Gehäuseteils (3) angeordnet ist und das Bedienelement (7) auf der anderen Seite des Gehäuseteils (3).

3. Vorrichtung nach Anspruch 2, **dadurch gekennzeichnet,**
- **dass** die Sprühlanze (4) ein zumindest abschnittsweise starr ausgebildetes Rohr umfasst, das dichtend durch die Verbindungsvorrichtung (6) hindurchgeführt ist,
- und **dass** die Ausgabeöffnung (5) und das Bedienelement (7) an dem Rohr vorgesehen sind.

4. Vorrichtung nach einem der Ansprüche 1 bis 3, **dadurch gekennzeichnet, dass** die Verbindungsvorrichtung (6) ein Linearlager (11) zur Längsführung, insbesondere zur Ermöglichung eines linearen Freiheitsgrades, der Sprühlanze (4) gegenüber dem Gehäuseteil (3) umfasst.

5. Vorrichtung nach Anspruch 4, **dadurch gekennzeichnet, dass** das Linearlager (11) in dem Kugelkopf (10) vorgesehen ist.

6. Vorrichtung nach einem der Ansprüche 1 bis 5, **dadurch gekennzeichnet, dass** mindestens eine Lagerfläche (12') des Kugelkopfs (10), insbesondere die Lagerfläche (12') des Kugelkopflagers zur Lagerung des Kugelkopfes (10) in der Kugelkopfausnehmung (9) und/oder die Lagerfläche (12"") des Linearlagers (11) zur Lagerung der Sprühlanze (4), aus PTFE gebildet sind.

7. Vorrichtung nach einem der Ansprüche 1 bis 6, **dadurch gekennzeichnet,**
- **dass** die Lagerfläche (12") der Kugelkopfausnehmung (9) aus rostfreiem Edelstahl gebildet ist,
- und/oder dass die in dem Linearlager (11) geführte Lagerfläche (12‴ der Sprühlanze (4) aus rostfreiem Edelstahl gebildet ist.

8. Vorrichtung nach einem der Ansprüche 1 bis 7, **dadurch gekennzeichnet, dass** die Verbindungsvorrichtung (6) eine den Bewegungsraum der Sprühlanze (4) einschränkende Kulisse (13) oder Schablone oder einen Anschlag aufweist.

9. Vorrichtung nach einem der Ansprüche 1 bis 8, **dadurch gekennzeichnet, dass** jener Endabschnitt (14) der Sprühlanze (4), der im Bereich der Ausgabeöffnung (5) angeordnet ist, nachgiebig und insbesondere aus einem flexiblen, temperaturbeständigen Schlauchstück ausgebildet ist, und/oder dass im Endabschnitt (14) eine Ausgabedüse vorgesehen ist.

10. **Backvorrichtung** zum Herstellen gebackener, bevorzugt essbarer, Waffelformkörper, mit einem wärmedämmten Gehäuse (2) und einem beheizten Innenraum (1), in dem mehrere Backformen (15) entlang eines Endlosförderers angeordnet sind und jeweils nacheinander:
- einen Auftragsbereich (16) mit einer Teigauftragsvorrichtung zum Einbringen einer Backmasse in die geöffneten Backformen (15),
- einen Schließbereich (17) zum Schließen der Backformen (15),
- einen beheizten Backraum (18) zum Backen der in die Backformen (15) eingebrachten Backmasse,
- einen Öffenbereich (19) zum Öffnen der Backformen (15),
- einen Entnahmebereich (20) mit einer Entnahmevorrichtung (21) zur Entnahme der aus der Backmasse gebackenen formstabilen Waffelformkörper aus den geöffneten Backformen (15),
- und dann wieder den Auftragsbereich (16), durchlaufen,
**dadurch gekennzeichnet, dass** eine Vorrichtung nach einem der Ansprüche 1 bis 9 vorgesehen ist.

11. Backvorrichtung nach Anspruch 10, **dadurch gekennzeichnet, dass** der durch die Verbindungsvorrichtung (6) definierte Bewegungsraum der Sprühlanze (4) den Bereich nach dem Entnahmebereich (20) und vor dem Auftragsbereich (16) umfasst, sodass die Sprühlanze (4) zumindest auf jene Komponenten, insbesondere auf Backformen (15), der Backvorrichtung gerichtet werden kann, die sich nach dem Entnahmebereich (20) und vor dem Auftragsbereich (16) befinden.

12. Backvorrichtung nach Anspruch 10 oder 11, **dadurch gekennzeichnet,**
- **dass** das Gehäuseteil (3) der Vorrichtung einen Teil des Gehäuses (2) bildet,
- und/oder dass das Gehäuseteil (3) der Vorrichtung einen Teil einer Gehäusetür (22) bildet,
- oder dass das Gehäuseteil (3) der Vorrichtung eine Gehäusetür (22) des Gehäuses (2) ist.

13. Backvorrichtung nach einem der Ansprüche 10 bis 12, **dadurch gekennzeichnet, dass** im Bereich des Gehäuseteils (3) ein Sichtfenster (23) vorgesehen ist, wobei das Sichtfenster (23) insbesondere als Isolierglasanordnung ausgebildet ist.

## Claims

1. A device for maintenance and in particular cleaning of components disposed in a heated inner space (1) of a housing (2) of a baking device, comprising:
- a housing member (3) for forming part of the housing (2) of the baking device or for connecting to the housing (2) of the baking device,
- a spray lance (4) with a dispensing opening (5) for dispensing a spray medium, in particular for dispensing compressed air,
- a connecting device (6) for movably holding the spray lance (4) in or on the housing member (3).
**characterised**
- **in that** the connecting device (6) comprises a swivel bearing (8) to enable the spray lance (4) to be swivelled relative to the housing member (3),
- and **in that** the swivel bearing (8) is designed as a ball head bearing and comprises a ball head (10) mounted, in particular in a sealing manner, in a ball head recess (9).

2. The device according to claim 1, **characterised**
- **in that** an operating element (7) is provided for manual movement and for selecting the position of the spray lance (4) relative to the housing member (3),
- and **in that** the dispensing opening (5) is disposed on one side of the housing member (3) and the operating element (7) is disposed on the other side of the housing member (3).

3. The device according to claim 2, **characterised**
- **in that** the spray lance (4) comprises a tube which is rigid, at least in some sections, and which is passed through the connecting device (6) sealingly,
- and **in that** the dispensing opening (5) and the operating element (7) are provided on the tube.

4. The device according to one of claims 1 to 3, **characterised in that** the connecting device (6) comprises a linear bearing (11) for longitudinal guidance, in particular for allowing a linear degree of freedom, of the spray lance (4) relative to the housing member (3).

5. The device according to claim 4, **characterised in that** the linear bearing (11) is provided in the ball head (10).

6. The device according to one of claims 1 to 5, **characterised in that** at least one bearing surface (12') of the ball head (10), in particular the bearing surface (12') of the ball head bearing for mounting the ball head (10) in the ball head recess (9) and/or the bearing surface (12'"') of the linear bearing (11) for mounting the spray lance (4), are formed from PTFE.

7. The device according to one of claims 1 to 6, **characterised**
- **in that** the bearing surface (12") of the ball head recess (9) is formed from stainless steel,
- and/or in that the bearing surface (12"') of the spray lance (4) guided in the linear bearing (11) is formed from stainless steel.

8. The device according to any one of claims 1 to 7, **characterised in that** the connecting device (6) has a slotted link (13) or screen or a stop restricting the range of movement of the spray lance (4).

9. The device according to one of claims 1 to 8, **characterised in that** the end section (14) of the spray lance (4) which is disposed in the region of the dispensing opening (5) is compliant and is formed, in particular, from a flexible, temperature-resistant hose piece, and/or **in that** a dispensing nozzle is provided in the end section (14).

10. A **baking device** for the production of baked, preferably edible, moulded wafer bodies, comprising a thermally insulated housing (2) and a heated inner space (1) in which a plurality of baking moulds (15) are arranged along an endless conveyor and successively pass:
- a depositing region (16) with a dough depositing device for depositing a baking mass into the opened baking moulds (15),
- a closing region (17) for closing the baking moulds (15),
- a heated baking chamber (18) for baking the baking mass deposited in the baking moulds (15),
- an opening region (19) for opening the baking moulds (15),
- a removal region (20) with a removal device (21) for removing the dimensionally stable moulded wafer bodies baked from the baking mass from the opened baking moulds (15),
- and then again the depositing region (16),
**characterised in that** a device according to any one of claims 1 to 9 is provided.

11. The baking device according to claim 10, **characterised in that** the range of movement of the spray lance (4) defined by the connecting device (6) comprises the region downstream of the removal region (20) and upstream of the depositing region (16), so that the spray lance (4) can be directed at least onto those components, in particular baking moulds (15), of the baking device which are located downstream of the removal region (20) and upstream of the depositing region (16).

12. The baking device according to claim 10 or 11, **characterised**
- **in that** the housing member (3) of the device forms part of the housing (2),
- and/or in that the housing member (3) of the device forms part of a housing door (22),
- or in that the housing member (3) of the device is a housing door (22) of the housing (2).

13. Baking device according to one of the claims 10 to 12, **characterised in that** a viewing window (23) is provided in the region of the housing member (3), wherein the viewing window (23) is formed in particular as an insulating glass arrangement.

## Revendications

1. Dispositif pour l'entretien et en particulier le nettoyage de composants agencés dans un espace intérieur (1) chauffé d'un boîtier (2) d'un dispositif de cuisson, comprenant :
- une partie (3) de boîtier destinée à faire partie du boîtier (2) du dispositif de cuisson ou à être reliée au boîtier (2) du dispositif de cuisson,
- une lance de diffusion (4) comprenant une ouverture de distribution (5) pour la distribution d'un fluide de diffusion, en particulier pour la diffusion d'air sous pression,
- un dispositif de liaison (6) pour le montage mobile de la lance de diffusion (4) dans la partie (3) de boîtier ou sur celle-ci,
**caractérisée**
- **en ce que** le dispositif de liaison (6) comprend un palier de pivotement (8) permettant un pivotement de la lance de diffusion (4) par rapport à la partie (3) de boîtier,
- et **en ce que** le palier de pivotement (8) est conçu sous la forme d'un palier à rotule et comprend une tête sphérique (10) logée, en particulier de manière étanche, dans un logement (9) de tête sphérique.

2. Dispositif selon la revendication 1, **caractérisé**
- **en ce qu'**un élément de commande (7) est prévu pour le déplacement manuel et pour le choix de la position de la lance de diffusion (4) par rapport à la partie (3) de boîtier,
- et **en ce que** l'ouverture de distribution (5) est aménagée sur un côté de la partie (3) de boîtier et l'élément de commande (7) sur l'autre côté de la partie (3) de boîtier.

3. Dispositif selon la revendication 2, **caractérisé**
- **en ce que** la lance de diffusion (4) comprend un tube au moins partiellement rigide, qui traverse de manière étanche le dispositif de liaison (6),
- et **en ce que** l'ouverture de distribution (5) et l'élément de commande (7) sont prévus sur le tube.

4. Dispositif selon l'une des revendications 1 à 3, **caractérisé en ce que** le dispositif de liaison (6) comprend un palier linéaire (11) pour le guidage longitudinal, en particulier pour permettre un degré de liberté linéaire, de la lance de diffusion (4) par rapport à la partie (3) de boîtier.

5. Dispositif selon la revendication 4, **caractérisé en ce que** le palier linéaire (11) est prévu dans la tête sphérique (10).

6. Dispositif selon l'une des revendications 1 à 5, **caractérisé en ce qu'**au moins une surface d'appui (12') de la tête sphérique (10), en particulier la surface d'appui (12') du palier à rotule pour le montage de la tête sphérique (10) dans le logement (9) de tête sphérique et/ou la surface d'appui (12"") du palier linéaire (11) pour le montage de la lance de diffusion (4), sont en PTFE.

7. Le dispositif selon l'une des revendications 1 à 6, **caractérisé**
- **en ce que** la surface d'appui (12") du logement (9) de tête sphérique est en acier inoxydable,
- et/ou en ce que la surface d'appui (12"') de la lance de diffusion (4) guidée dans le palier linéaire (11) est en acier inoxydable.

8. Le dispositif selon l'une des revendications 1 à 7, **caractérisé en ce que** le dispositif de liaison (6) comprend une coulisse (13) ou un gabarit ou une butée limitant l'espace de mouvement de la lance de diffusion (4).

9. Le dispositif selon l'une des revendications 1 à 8, **caractérisé en ce que** la partie terminale (14) de la lance de diffusion (4) qui est agencée dans la zone de l'ouverture de distribution (5) est flexible et est notamment constituée d'un morceau de tuyau flexible résistant à la température, et/ou **en ce qu'**une buse de distribution est prévue dans la partie terminale (14).

10. **Dispositif de cuisson** pour la fabrication de produits cuits en forme de gaufre, de préférence comestibles, avec un boîtier calorifugé (2) et un espace intérieur (1) chauffé, dans lequel plusieurs moules de cuisson (15) sont agencés le long d'un convoyeur sans fin et chacun à la suite d'un autre ;
- une zone de dépose (16) avec un dispositif de dépose de pâte pour introduire une masse de cuisson dans les moules de cuisson (15) ouverts,
- une zone de fermeture (17) pour fermer les moules de cuisson (15),
- une chambre de cuisson (18) chauffée pour cuire la masse de cuisson introduite dans les moules de cuisson (15),
- une zone d'ouverture (19) pour ouvrir les moules de cuisson (15),
- une zone de prélèvement (20) avec un dispositif de prélèvement (21) pour prélever dans les moules de cuisson ouverts (15) les corps de gaufres cuits à partir de la masse de cuisson et ayant une forme stable,
- puis repasser par la zone de dépose (16),
**caractérisé en ce qu'**il est prévu un dispositif selon l'une des revendications 1 à 9.

11. Dispositif de cuisson selon la revendication 10, **caractérisé en ce que** l'espace de mouvement de la lance de diffusion (4) défini par le dispositif de liaison (6) comprend la zone située après la zone de prélèvement (20) et avant la zone de dépose (16), de sorte que la lance de diffusion (4) soit apte à être dirigée au moins sur les composants, en particulier sur les moules de cuisson (15) du dispositif de cuisson, qui se trouvent après la zone de prélèvement (20) et avant la zone de dépose (16).

12. Dispositif de cuisson selon la revendication 10 ou 11, **caractérisé**
- **en ce que** la partie (3) de boîtier du dispositif forme une partie du boîtier (2),
- et/ou en ce que la partie (3) de boîtier du dispositif constitue une partie d'une porte de boîtier (22),
- ou en ce que la partie (3) de boîtier du dispositif est une porte de boîtier (22) du boîtier (2).

13. Dispositif de cuisson selon l'une des revendications 10 à 12, **caractérisé en ce qu'**une fenêtre de visualisation (23) est prévue dans la zone de la partie (3) de boîtier, la fenêtre de visualisation (23) étant réalisée en particulier sous la forme d'un agencement en verre isolant.
